# EUROPÄISCHE PATENTSCHRIFT

(11) **EP 2 377 445 B1**
(45) Veröffentlichungstag und Bekanntmachung des Hinweises auf die Patenterteilung: **20.04.2016**
(21) Anmeldenummer: 11401035.8
(22) Anmeldetag: 01.03.2011
(51) Int. Cl.: A47L 9/28

(54) **Staubsauger mit einer Gebläseregelung**
Vacuum cleaner with fan regulation device
Aspirateur avec un dispositif de régulation du ventilateur

(30) Priorität: 16.04.2010 EP 10401057
(43) Veröffentlichungstag der Anmeldung: 19.10.2011
(73) Patentinhaber: Miele & Cie. KG, 33332 Gütersloh (DE)
(72) Erfinder: Gerhards, Manfred, 53879, Euskirchen (DE)

(56) Entgegenhaltungen:
- EP-A2- 1 997 417
- JP-A- 5 023 273
- JP-A- 11 221 180
- US-A1- 2007 136 980

## Beschreibung

Die Erfindung betrifft einen Staubsauger mit einem Staubsaugergebläse. Derartige Staubsauger sind an sich bekannt.

Staubsauger werden häufig in erster Linie nach ihrer Aufnahmeleistung bewertet, wobei mit einer hohen Aufnahmeleistung eine Erwartung einer hohen Saugleistung einhergeht. Die elektrische Aufnahmeleistung eines Staubsaugers bleibt während verschiedener Arbeitsbedingungen und damit einhergehenden Drosselzustände, also z.B. aufgrund von Unterschieden im jeweils bearbeiteten Untergrund, insbesondere unterschiedlich dichten Teppichbelägen, nicht konstant, sondern sinkt von "offenem Rohr" (ohne Drosselung) bis zum vollständigen Verschließen des Ansaugrohres stetig ab. Die abgegebene Luftleistung P2 - als Produkt von Unterdruck und Durchfluss - hat ihr Maximum jedoch etwa in der Mitte zwischen maximalem Durchfluss und damit maximaler elektrischer Aufnahmeleistung und Durchfluss Null und damit minimaler elektrischer Aufnahmeleistung. Das bedeutet, dass aufgrund der Gebläse- und Motorkennline im Bereich der maximal erzielbaren Luftleistung (etwa in der Mitte der Kennlinie) nicht mehr die anfängliche, maximale elektrische Aufnahmeleistung aus dem Netz entnommen und umgesetzt werden kann, sondern eine deutlich geringere elektrische Aufnahmeleistung zur Umwandlung in Luftleistung zur Verfügung steht.

Weil die Aufnahmeleistung des Antriebsaggregats des Staubsaugergebläses - im Folgenden kurz als Aufnahmeleistung des Staubsaugers oder bloß als Aufnahmeleistung bezeichnet - zunehmend auch relevant werden könnte, wenn es darum geht, Vorgaben für bestimmte Energieeffizienzklassen für elektrische Haushaltsgeräte, und damit auch Staubsauger, zu erfüllen, kommt es normalerweise nicht in Betracht, die Aufnahmeleistung zur Kompensation der sinkenden Luftleistung zu erhöhen.

Des Weiteren geht systembedingt mit zunehmend gefülltem Staubbeutel eine an einer Bodendüse verfügbare Luftleistung durch einen mit dem Füllgrad zunehmenden Druckverlust innerhalb des Staubbeutels zurück. Aufgrund eines damit ebenfalls zurückgehenden Durchflusses durch die Bodendüse oder ein sich an die Bodendüse anschließendes Saugrohr und der Abhängigkeit einer Aufnahmeleistung eines Antriebsaggregats des Staubsaugergebläses von dem Durchfluss sinkt die Aufnahmeleistung noch zusätzlich, so dass im Ergebnis noch weniger Luftleistung an der Bodendüse zur Verfügung steht.

Es besteht deshalb der Wunsch, einen Staubsauger derart weiterzubilden, dass eine günstige Luftleistung ohne Erhöhung der Aufnahmeleistung erzielt wird

In der EP 1 997417A2 hingegen wird der Saugdruck aus einer Kombination von Leistungsmessung und Drehzahl eines Reluktanzmotors beschrieben.

Es ist bekannt bei Staubsaugern den aufgenommenen Strom zu erfassen und auf einen maximalen Wert zu limitieren, um Restriktionen bezüglich der maximalen Stromaufnahme in Versorgungsnetzen mit limitierter Stromaufnahme zu genügen. In der JP 5 023273 A ist beispielsweise ein solches Verfahren offenbart. In der EP US 2007/136980 A1 und JP 11221180A wird ebenfalls auf eine Limitierung bzw. Regelung des Motorstromes abgestellt. Dabei werden jedoch Spannungsschwankungen nicht berücksichtigt. Solche Spannungsschwankungen haben unterschiedliche Ursachen:
- In der Regel sind Elektrogeräte für einen großen Spannungsbereich zugelassen. So kann beispielsweise das gleiche Gerät in Japan bei einer nennspannung von 100 Volt und in den USA bei einer Nennspannung mit 120 Volt betrieben werden. Da die Spannung quadratisch eingeht, führt dies in den USA zu einer 44% höheren Leistungsaufnahme.
- In den Spannungsnetzen treten abhängig vom Gesamtverbrauch der Nutzer Spannungsschwankungen auf, hier sind 10% zulässig.
- Beim Einschalten von Verbrauchern mit hoher Stromaufnahme, zu denen Staubsauger gehören, wird ein lastabhängiger Spannungsabfall verursacht.
Insgesamt führen die möglichen Spannungsschwankungen dazu, dass die gewünschte Saugleistung auch bei Staubsaugern mit einer Limitierung bzw. Regelung des Motorstromes um bis zu 50% schwanken kann.

Bei dem erfindungsgemäß ausgebildeten Staubsauger wird jedoch die tatsächlich aus dem Netz entnommene elektrische Leistung P1 unter Zuhilfenahme der momentan anliegenden Spannung und des momentan aufgenommenen Stromes auf einen vorgebbaren Wert geregelt, um bei den üblichen Schwankungen der anliegenden Netzspannung aufgrund von stromabhängigen Spannungsabfällen, Netztoleranzen oder Exemplarstreuungen die aufgenommene Leistung genau führen zu können. Weiterhin erlaubt diese Erfindung, die gleiche und konstante Aufnahmeleistung mit Saugern gleicher Ausprägung ohne weitere Anpassungen auch bei verschiedenen Netzspannungen (230 V / 240 V) und (100 V / 120 V) zu gewährleisten (sog. Weitbereichseingang).

Diese Aufgabe wird erfindungsgemäß mit einem Staubsauger mit den Merkmalen des Anspruchs 1 gelöst. Dazu sind bei einem Staubsauger mit einem Antriebsaggregat mit einer maximalen Aufnahmeleistung und Mitteln zum Betrieb des Antriebsaggregats unterhalb seiner maximalen Aufnahmeleistung eine vorgegebene oder vorgebbare Aufnahmeleistungsobergrenze und eine von dem oder den Mitteln zum Betrieb des Antriebsaggregats unterhalb seiner maximalen Aufnahmeleistung umfasste oder zugeordnete Regelungseinheit vorgesehen. Mit der Regelungseinheit wird als Regelgröße die tatsächliche Aufnahmeleistung des Antriebsaggregats erfasst und mit der Aufnahmeleistungsobergrenze bzw. einem Maß für die Aufnahmeleistungsobergrenze als Führungsgröße verglichen. Des Weiteren ist mit der Regelungseinheit die tatsächliche Aufnahmeleistung im Sinne einer Angleichung an die Führungsgröße zumindest in einem ersten Arbeitsbereich, in dem eine mögliche Aufnahmeleistung oberhalb der Aufnahmeleistungsobergrenze liegt, beeinflussbar.

Als bekannte Mittel zum Betrieb des Antriebsaggregats unterhalb seiner maximalen Aufnahmeleistung kommt eine Steuerelektronik in Betracht, mit der die Saugleistung des Staubsaugergebläses einstellbar ist. Die zusätzliche oder alternative Regelungseinheit begrenzt zum einen die Aufnahmeleistung des Antriebsaggregats auf die Aufnahmeleistungsobergrenze, so dass eine Einhaltung von Grenzwerten für z.B. eine Energieeffizienzklasse gewährleistet werden kann. Darüber hinaus bewirkt die Regelungseinheit eine Angleichung der tatsächlichen Aufnahmeleistung (Regelgröße) an die Aufnahmeleistungsobergrenze (Führungsgröße), so dass sich zumindest in einem Arbeitsbereich, in dem eine mögliche Aufnahmeleistung oberhalb der Aufnahmeleistungsobergrenze liegt, eine konstante Aufnahmeleistung im Bereich der Aufnahmeleistungsobergrenze einstellt, so dass mit der konstanten Aufnahmeleistung auch bei zunehmendem Füllgrad des Staubbeutels eine Maximierung der an der Bodendüse verfügbaren Luftleistung erreicht wird.

Vorteilhafte Ausgestaltungen der Erfindung sind Gegenstand der Unteransprüche. Dabei verwendete Rückbeziehungen weisen auf die weitere Ausbildung des Gegenstands des Hauptanspruchs durch die Merkmale des jeweiligen Unteranspruchs hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

In einer speziellen Ausführungsform der Erfindung ist vorgesehen, dass durch die Regelungseinheit die Regelgröße anhand eines dem Antriebsaggregat zuführbaren Motorstroms sowie gleichzeitig anliegender Motorspannung erfassbar ist oder erfasst wird. Eine Erfassung der Regelgrößen anhand des Motorstromes umfasst sowohl die unmittelbare Erfassung des Motorstroms selbst, als auch die zumindest mittelbare Erfassung des Motorstroms bei einer Leistungsmessung, nachdem die elektrische Leistung sich bekanntlich multiplikativ aus Strom und Spannung, hier Motorstrom und Motorspannung, ergibt. Diese elektrischen Größen lassen sich mit an sich bekannten Mitteln leicht erfassen und analog oder digital weiter verarbeiten. Gemäß einer weiteren Ausführungsform umfasst der Staubsauger Mittel zur Umwandlung dieser als Regelgröße erfassten elektrischen Größen in von der Regelungseinheit verarbeitbaren Kleinspannungen. Durch eine derartige Umwandlung der erfassten elektrischen Größen wird die jeweilige Regelgröße durch die Regelungseinheit direkt verarbeitbar. Als Mittel zur Umwandlung der Regelgrößen in verarbeitbare Kleinspannungen kommen insbesondere bei einem als Regelgröße erfassten Motorstrom ein so genannter Shuntwiderstand oder ein Stromwandler in Betracht, bei der Motorspannung vorzugsweise ein Spannungsteiler. Shuntwiderstände, Stromwandler und Spannungsteiler sowie deren Verwendung sind an sich bekannt.

Zur Begrenzung der Aufnahmeleistung des Antriebsaggregats kommt insbesondere eine so genannte Phasenanschnittssteuerung in Betracht. Entsprechend ist für eine Ausführungsform des Staubsaugers der o.g. und im Folgenden weiter beschriebenen Art vorgesehen, dass das oder die Mittel zur Begrenzung der Aufnahmeleistung des Antriebsaggregats auf die Aufnahmeleistungsobergrenze eine von einem Regler der Regelungseinheit ansteuerbare Phasenanschnittssteuerung umfasst bzw. umfassen, wobei die mit dem Regler erfolgende Ansteuerung der Phasenanschnittssteuerung eine Angleichung der Regelgröße an die Führungsgröße bewirkt.

Die eingangs genannte Aufgabe wird ebenfalls mit einem Verfahren zum Betrieb eines Staubsaugers der hier und nachfolgend beschriebenen Art gelöst. Dafür ist ein Verfahren mit den Merkmalen des zweiten unabhängigen Anspruchs vorgesehen. Das Verfahren zeichnet sich dadurch aus, dass eine Aufnahmeleistungsobergrenze fest oder veränderlich vorgegeben wird und dass das oder die Mittel die Aufnahmeleistung des Antriebsaggregats auf die Aufnahmeleistungsobergrenze begrenzt bzw. begrenzen, indem mit der Regelungseinheit, insbesondere deren Regler, als Regelgröße eine tatsächliche Aufnahmeleistung oder ein Maß für eine tatsächliche Aufnahmeleistung erfasst und mit der Aufnahmeleistungsobergrenze bzw. einem Maß für die Aufnahmeleistungsobergrenze als Führungsgrenze verglichen sowie im Sinne einer Angleichung an die Führungsgröße zumindest in einem ersten Arbeitsbereich, in dem eine mögliche Aufnahmeleistung oberhalb der Aufnahmeleistungsobergrenze liegt, beeinflusst wird.

Ausgestaltungen des Verfahrens zeichnen sich dadurch aus, dass ein an den Staubsauger angeschlossener weiterer Verbraucher, z.B. eine elektrische Teppichbürste, in gleicher Weise wie das Antriebsaggregat von der Begrenzung auf die Aufnahmeleistungsobergrenze betroffen ist. Bei einer alternativen Ausführungsform des Verfahrens ist vorgesehen, dass ein an den Staubsauger angeschlossener weiterer Verbraucher nicht von der Begrenzung auf die Aufnahmeleistungsobergrenze betroffen ist.

Wenn die Begrenzung auf die Aufnahmeleistungsobergrenze auch auf weitere Verbraucher ausgedehnt wird, kann sichergestellt werden, dass Grenzwerte, wie sie z.B. mit bestimmten Energieeffizienzklassen einhergehen, sicher eingehalten werden. Zudem kann bei Verwendung eines zusätzlichen Verbrauchers in Form einer elektrischen Bodenwalze die Leistungsaufnahme des Antriebsaggregats des Staubsaugergebläses gegenüber einem Betrieb ohne eine solche Bodenwalze im Hinblick auf die Staubaufnahme erheblich reduziert werden, so dass beide Aggregate, also Bodenwalze und Antriebsaggregat des Staubsaugergebläses, innerhalb der Grenzen der Aufnahmeleistungsobergrenze betreibbar sind.

Wenn weitere Verbraucher nicht von der Begrenzung auf die Aufnahmeleistungsobergrenze betroffen sind, lassen sich diese mit der jeweiligen Maximalleistung und der damit einhergehenden Effizienz betreiben, während durch die Begrenzung des Antriebsaggregats auf die Aufnahmeobergrenze eine optimale Luftleistung an der Bodendüse erzielt wird.

Der Vorteil der Erfindung besteht zunächst darin, dass der Rückgang der Saugleistung an der Bodendüse aufgrund des zunehmenden Füllgrads des Staubbeutels kompensiert oder zumindest in einem erheblichen Umfang kompensiert werden kann. Diese Kompensation erfolgt, indem die normalerweise aufgrund des zurückgehenden Durchflusses ebenfalls zurückgehende Aufnahmeleistung durch die Regelungseinheit auf einen anfänglichen Maximalwert oder die vorgegebene oder vorgebbare Aufnahmeleistungsobergrenze nachgeführt wird. Darüber hinaus ist die Erfindung aber auch vorteilhaft, weil das Antriebsaggregat, insbesondere ein das Antriebsaggregat bildender Kommutatormotor, und die Gebläseeinheit immer gewissen Fertigungsschwankungen innerhalb der Serie unterliegen, so dass daraus resultierend auch die Aufnahmeleistung der einzelnen Staubsauger innerhalb der Serie um einen gewissen, unvermeidlichen Prozentsatz schwankt. Mit der Erfindung ist auch eine Kompensation solcher Schwankungen möglich, so dass alle Staubsauger einer Serie, in der die erfindungsgemäße Lösung verwirklicht ist, im Wesentlichen mit der gleichen Aufnahmeleistung betreibbar sind. Des Weiteren ist die Erfindung auch von Vorteil, weil die Aufnahmeleistung nicht konstant über die gesamte Lebensdauer eines Motors ist, sondern sich mit dessen Zustand und dessen Betriebsdauer ändert. Ursache dafür ist beispielsweise der Zustand von Lagern, eine Verschiebung einer so genannten neutralen Zone, eine Patinabildung auf einer Kommutatorlauffläche, abnehmende Bürstenwiderstände, zunehmende Bürstenübergangswiderstände, usw.. Die erfindungsgemäße Lösung erlaubt auch eine Kompensation dieser Schwankungen. Schließlich erlaubt die Erfindung auch die Kompensation einer sinkenden Aufnahmeleistung bei haushaltsüblichem Betrieb eines Staubsaugers, die daraus resultiert, dass die mit der Betriebsdauer zunehmende Erwärmung des Antriebsaggregats zu einer Erhöhung des Wicklungswiderstands und damit zu einer Verringerung der Leistungsaufnahme führt. Auch dieser Leistungsabfall ist mit dem Ansatz gemäß der Erfindung kompensierbar.

Nachfolgend wird ein Ausführungsbeispiel der Erfindung anhand der Zeichnung näher erläutert. Einander entsprechende Gegenstände oder Elemente sind in allen Figuren mit gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen oder Modifikationen möglich, insbesondere solche, die z. B. durch Kombination oder Abwandlung von einzelnen, in Verbindung mit den in der allgemeinen Beschreibung, des oder jedes Ausführungsbeispiels sowie den Ansprüchen beschriebenen und in den Zeichnungen enthaltenen Merkmalen oder daraus ersichtlichen Verfahrensschritten für den Fachmann im Hinblick auf die Lösung der Aufgabe entnehmbar sind und durch kombinierbare Merkmale zu einem neuen Gegenstand führen.

Es zeigen
- Figur 1: einen Staubsauger an sich bekannter Art in einer Ausführungsform als Bodenstaubsauger,
- Figur 2: ein Bedienfeld eines Staubsaugers gemäß Figur 1,
- Figur 3: verschiedene Kennlinien für zumindest zwei unterschiedlich ausgelegte Antriebsaggregate eines Staubsaugers zur Erläuterung des Ansatzes gemäß der Erfindung und
- Figur 4: ein schematisch vereinfachtes Schaltbild einer Realisierungsmöglichkeit des Ansatzes gemäß der Erfindung.

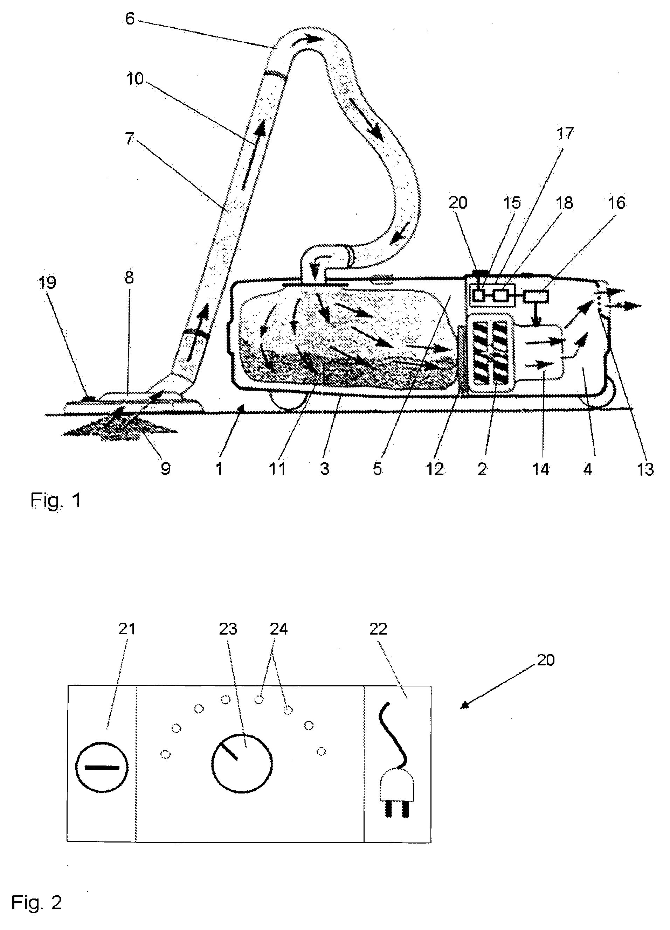

Figur 1 zeigt schematisch einen Staubsauger 1 in einer Ausführungsform als Bodenstaubsauger. Die Erfindung eignet sich jedoch grundsätzlich für jeden Staubsauger 1, der mit einer Gebläseeinheit mit einem motorbetriebenen Sauggebläse 2 ausgestattet ist. Als weitere, nicht dargestellte Beispiele seien hier Handstaubsauger, Uprights, Akkusauger oder Robotsauger genannt. Der gezeigte Staubsauger 1 besitzt ein Gehäuse 3, welches in einen Gebläseraum 4 und einen Staubsammelraum 5 unterteilt ist. Im Gebläseraum 4 ist das Sauggebläse 2 mit seiner Saugseite zum Staubsammelraum 5 gerichtet und erzeugt dort einen Unterdruck, der über einen angeschlossenen Saugschlauch 6 und ein Saugrohr 7 an den Saugmund einer Bodendüse 8 weitergegeben wird. Somit wird mit Schmutz 9 beladene Luft - durch die Pfeile 10 symbolisiert - am bearbeiteten Untergrund aufgesaugt und über Staubabscheider gereinigt. Im Ausführungsbeispiel ist dies ein Staubbeutel 11 mit nachgeordnetem Motorfilter 12 und Abluftfilter 13. Die gereinigte Luft wird wieder an die Umgebung abgegeben. Die Ansteuerung des Gebläsemotors 14 erfolgt über eine Funktionseinheit, welche zumindest die Regelelektronik 15 eines Wechselrichters umfasst. Die Regelelektronik 15 schaltet Leistungshalbleiter 16 und ist Bestandteil einer als Kasten symbolisierten Mikroprozessor-Steuerung 17. Die Mikroprozessor-Steuerung 17 enthält außerdem eine Auswerteschaltung 18 zur Erkennung des Bodenbelags und steht in Verbindung mit einer in Figur 2 dargestellten Bedien- und Anzeigeeinrichtung 20. Der Staubsauger 1 kann neben der Auswerteschaltung 18 noch einen in der Bodendüse 8 angeordneten Bodenbelagssensor, beispielsweise einen Ultraschallsensor 19 mit entsprechender Auswerteelektronik besitzen.

In Figur 2 ist die Bedien- und Anzeigeeinrichtung 20 dargestellt. Seitlich sind ein Ein-AusSchalter 21 und eine Kabel-Rückhol-Taste 22 angeordnet. Zentral angeordnet ist ein Drehschalter 23, mit dem unterschiedliche Leistungsstufen 24 einstellbar sind (Leistungseinstellung). Der Drehschalter 23 und die davon in Abhängigkeit von dessen Stellung angesteuerte Regelelektronik 15 sind Mittel zum Betrieb des Antriebsaggregats (Sauggebläse 2) unterhalb seiner maximalen Aufnahmeleistung.

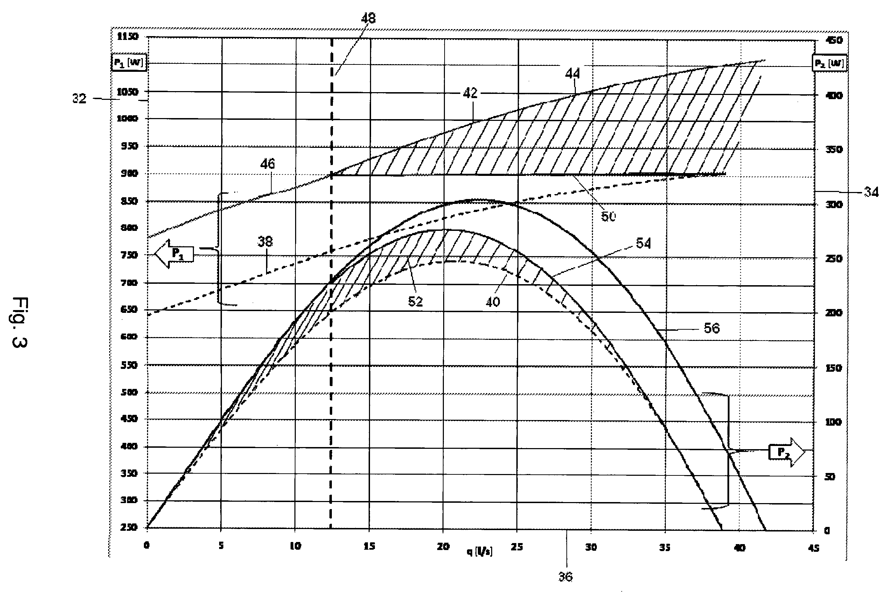

Figur 3 zeigt eine real aufgenommene Kennlinie eines Antriebsaggregats für eine Gebläseeinheit eines Staubsaugers 1 (Figur 1). Auf einer linken Ordinate 32 ist eine aufgenommene elektrische Leistung P1 aufgetragen. Auf einer rechten Ordinate 34 ist eine an der Bodendüse abgegebene Luftleistung P2 aufgetragen. Die Kennlinien sind auf der Abszisse 36 über einem Durchfluss q aufgetragen.

Eine erste Leistungsaufnahmekurve 38 stellt eine Gebläseeinheit mit einem Antriebsaggregat dar, welches eine maximale Aufnahmeleistung P1_max von ca. 1.000 W bei einem maximalen Durchfluss q_max = 39 l/s mit Nennspannung erzielt. Die anliegende Motorspannung kann über den Kennlinienverlauf in weiten Bereichen, hier etwa +/- 20 V, vom Nominalwert schwanken, ohne Auswirkungen auf die aufgenommene Leistung zu haben. Eine zugehörige erste Luftleistungskennlinie 40 der abgegebenen Luftleistung P2 erreicht in der dargestellten Versuchsausführung ein Maximum bei einem Durchfluss von ca. q = 21 l/s mit einer maximalen Luftleistung P2_max von ca. 240 W. An dieser Stelle (q = 21 l/s) beträgt die elektrische Aufnahmeleistung P1 jedoch nur noch ca. 825 W, die entsprechend des Gesamtwirkungsgrades in Luftleistung P2 umgewandelt werden kann.

Eine zweite Leistungsaufnahmekurve 42 mit deren erstem und zweitem Kennlinienabschnitt 44, 46 stellt einen Verlauf einer Leistungsaufnahme eines stärker ausgelegten Motors dar, welcher mit Nennspannung eine maximale Aufnahmeleistung P1_max von ca. 1060 W bei q_max = 40,5 l/s erzielt.

Der dem erfindungsgemäßen Ansatz zugrunde liegende Lösungsgedanke beruht nun darauf, ein stärkeres Antriebsaggregat (Motoreinheit) mit einer Leistungsaufnahmekurve, wie sie z.B. der zweiten Leistungsaufnahmekurve 42 entspricht, bis zu einer Grenze 48 mit einer reduzierten Spannung derart zu speisen, dass sich eine konstante, vom Durchfluss q (Drosselzustand) unabhängige Aufnahmeleistung P1 ergibt. In Figur 3 ist dies durch einen geregelten Kennlinienabschnitt 50 dargestellt. Dies hat zur Folge, dass das Antriebsaggregat auch im Bereich der maximalen Luft- oder Abgabeleistung P2_max mit der gleichen Aufnahmeleistung P1 arbeitet wie im Punkt der maximalen Aufnahmeleistung P1_max; die Kennlinie der Aufnahmeleistung ist also abschnittsweise eine Gerade (geregelter Kennlinienabschnitt 50). Ab der Grenze 48 ist die geregelte Motorspannung so hoch, dass sie der anliegenden Nenn- oder Netzspannung entspricht. Die Kennlinie folgt dann bei weiter zunehmendem Füllgrad des Staubbeutels (zunehmender Druckverlust über den Staubbeutel; abnehmender Durchfluss q) einer üblichen Antriebskennlinie bei konstanter Spannung (zweiter Kennlinienabschnitt 46).

Die Grenze 48 ergibt sich aus der Position der Aufnahmeleistungsobergrenze, hier P1 = 900W, auf der zum stärker ausgelegten Antriebsaggregat gehörenden zweiten Leistungsaufnahmekurve 42. Bei Durchflusswerten oberhalb der Grenze 48 ergibt sich ein erster Arbeitsbereich, in dem eine mögliche Aufnahmeleistung oberhalb der Aufnahmeleistungsobergrenze liegt. Durch die Regelung wird in diesem ersten Arbeitsbereich die tatsächliche Aufnahmeleistung (Regelgröße) mit der Aufnahmeleistungsobergrenze (Führungsgröße) verglichen und im Sinne einer Angleichung an die Aufnahmeleistungsobergrenze beeinflusst. Die DIN 19226 definiert den Begriff Regelung wie folgt: "Das Regeln, die Regelung, ist ein Vorgang, bei dem fortlaufend eine erste Größe (Regelgröße) erfasst, mit einer anderen Größe (Führungsgröße) verglichen und im Sinne einer Angleichung an die Führungsgröße beeinflusst wird." In einem zweiten Arbeitsbereich, in dem die mögliche Aufnahmeleistung bereits unterhalb der Aufnahmeleistungsobergrenze liegt, ist keine Regelung im obigen Sinne mehr möglich/nötig.

Der Vorteil in der erzielbaren Luftleistung P2 zwischen einem geregelten und einem ungeregelten Antriebsaggregat (Kennlinien 50 und 46 bzw. 38) zeigt sich in einem schraffierten Bereich 52, welcher sich zwischen der zum ungeregelten Antrieb mit hier P1_max = 900W gehörigen ersten Luftleistungskennlinie 40 und einer zum auf eine Aufnahmeleistungsobergrenze von ebenfalls P1_max = 900W geregelten, stärken Antriebseinheit gehörigen zweiten Luftleistungskennlinie 54 ergibt. Dieser schraffierte Bereich 52 stellt die zusätzlich erzielbare Luftleistung P2 an der Bodendüse für jeden Betriebspunkt auf der Kennlinie dar. Die Erhöhung der Luftleistung P2 hat ihren größten Effekt in einem tatsächlichen Arbeits- und Anwendungsbereich des Staubsaugers 1, nämlich in einem Bereich zwischen einer Durchflussmenge von ca. q=10l/s und q=27l/s (Liter pro Sekunde).

Eine dritte Luftleistungskennlinie 56 stellt die Luftleistung P2 des stärker ausgelegten Antriebsaggregats bei einem ungeregelten Betrieb, also bei einem Betrieb entsprechend der zweiten Leistungsaufnahmekurve 42, dar.

Die Darstellung in Figur 3 zeigt demnach, dass sich, wenn ein stärker ausgelegtes Antriebsaggregat in dem ersten Arbeitsbereich konstant mit der maximalen Aufnahmeleistung eines schwächeren Antriebsaggregats (= Aufnahmeleistungsobergrenze) betrieben wird, eine signifikante Erhöhung der Luftleistung P2 in einem relevanten Arbeitsbereich erreichen lässt. Die mit dem konstanten Betrieb im Bereich der Aufnahmeleistungsobergrenze erreichte Begrenzung der Aufnahmeleistung auf diese Aufnahmeleistungsobergrenze erlaubt neben der Erhöhung der Luftleistung P2 auch das Einhalten von etwa mit Energieeffizienzklassen oder gesetzlichen Vorgaben oder sonstigen Richtwerten assoziierten Grenzwerten.

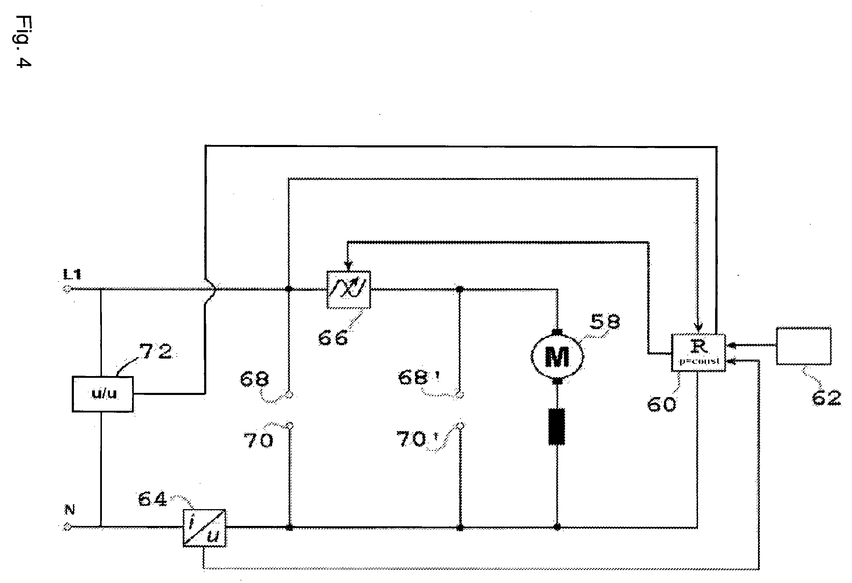

Figur 4 zeigt ein Beispiel für eine Realisierung des Ansatzes gemäß der Erfindung. Ein Antriebsaggregat eines Staubsaugers 1 (Figur 1) ist als Elektromotor 58 dargestellt; dieser entspricht dem in Figur 1 dargestellten Gebläsemotor 14. Dieser ist wie üblich an eine über Anschlussklemmen L1, N anliegende Versorgungsspannung, normalerweise ein Haushaltsniederspannungsnetz mit einem effektiven Nennwert von 230 V AC, anschließbar. Zur Zuleitung der Versorgungsspannung an die Anschlussklemmen ist das Anschlusskabel des Staubsaugers 1 vorgesehen.

Zur Beeinflussung der tatsächlichen Aufnahmeleistung des Antriebsaggregats, hier also des Elektromotors 58, im Sinne einer Angleichung an die vorgegebene oder vorgebbare Aufnahmeleistungsobergrenze ist ein Regler 60 vorgesehen. Diesem wird die vorgegebene oder vorgebbare Aufnahmeleistungsobergrenze oder ein Maß dafür mit einer Leistungsvorgabevorrichtung 62 vorgegeben. Die Leistungsvorgabevorrichtung 62 kann vom Benutzer des Staubsaugers 1 beeinflussbar sein. Normalerweise bewirkt die Leistungsvorgabevorrichtung 62 durch Ausgabe der Aufnahmeleistungsobergrenze an deren Ausgang eine fixe externe Leistungsvorgabe. Die Aufnahmeleistungsobergrenze wird von dem Regler 60 als Führungsgröße verarbeitet. Als Regelgröße verarbeitet der Regler 60 eine tatsächliche Aufnahmeleistung oder ein Maß für die tatsächliche Aufnahmeleistung des Elektromotors 58. Als Maß für die tatsächliche Aufnahmeleistung wird sowohl der momentane Motorstrom als auch die momentan anliegende Motorspannung herangezogen. Bei der Erfassung des Motorstromes kommt ein Strom-Spannungs-Wandler in Betracht, für die anliegende Motorspannung vorzugsweise ein Spannungsteiler. Für gute und genaue Regelungen sind Signalwandler ohne Phasenverschiebung vorteilhaft.. Der Strom-Spannungs-Wandler 64 kann als Shunt-Widerstand (nicht dargestellt) realisiert sein. Dieser Shunt-Widerstand kann als diskretes Bauteil auf einer die in Figur 4 dargestellte Schaltung umfassenden Elektronikplatine oder über dort vorgesehene, aufgrund entsprechender Auswahl von Länge und Querschnitt geeignete Leiterbahnen realisiert sein. Die so erhältliche Kleinspannung kann vor Zuführung an den Regler 60 aufbereitet werden (Gleichrichtung und/oder Glättung und/oder ggf. Integration). Die der Netzspannung proportionale und phasengleiche Kleinspannung wird, gegebenenfalls auch nach Aufbereitung, ebenfalls dem Regler 60 zur Verfügung gestellt. Der Regler 60 steuert entsprechend einer internen Regelungsfunktionalität und aufgrund der durch die Leistungsvorgabevorrichtung 62 zugeführten Führungsgröße und der von dem Strom-Spannungs-Wandler 64 zugeführten Regelgröße und der vom Spannungssensor (72) zugeführten Regelgröße ein Stellglied an, das in Figur 4 als Leistungshalbleiter 66 gezeigt ist und in dieser Ausführungsform einen Phasenanschnitt bewirkt.

Alle anderen bekannten Möglichkeiten zur Leistungsregelung des Elektromotors 58 kommen ebenfalls in Betracht, z.B. Phasenabschnittssteuerung, Vorwiderstand, Pulsweitenmodulation, Frequenzumrichter, Feldanzapfungen und Ähnliches. Durch die Ansteuerung des Leistungshalbleiters 66 oder sonst geeigneter Mittel zur Leistungsregelung des Elektromotors 58 erfolgt die Beeinflussung der Leistungsaufnahme des Elektromotors 58.

Der Ausgang des Reglers 60 kann noch mit einer von einem Benutzer gewählten Leistungseinstellung verrechnet werden, so dass die von der Leistungsvorgabevorrichtung 62 abgegebene Aufnahmeleistungsobergrenze als globaler Grenzwert für die Leistungsaufnahme des Elektromotors 58 fungiert, der durch eine dem Benutzer zugängliche Leistungseinstellung lokal, also zeitlich und entsprechend der Bedürfnisse des Benutzers, abgesenkt werden kann. Für die vom Benutzer wählbare Leistungseinstellung kommt ein z.B. als Potentiometer (in Figur 4 nicht gezeigt) ausgeführter Drehschalter 23 (Figur 2) in Betracht.

Als Regelungsfunktionalität des Reglers 60 kommt grundsätzlich jede bekannte Regelungsfunktionalität in Betracht, also z.B. eine Proportionalregelung (P-Regelung), eine Proportional-Integral-Regelung (PI-Regelung), eine Proportional-Integral-Differential-Regelung (PID-Regelung) oder Kombinationen daraus in Betracht, z.B. PD-Regelung, usw. Die Regelungsfunktionalität kann in dem Regler 60 in Software oder in Hardware implementiert sein.

In der Darstellung in Figur 4 sind parallel zum Elektromotor 58 Anschlussklemmen 68, 70; 68', 70' gezeigt. An diese sind zusätzliche Verbraucher, wie z.B. Staubsaugerzubehör, also z.B. eine elektrische Teppichbürste, anschließbar. Bei der Anordnung der Anschlussklemmen 68, 70 elektrisch vor dem Leistungshalbleiter 66 wird der oder jeder dort anschließbare zusätzliche Verbraucher direkt mit der über L1, N anliegenden Netzspannung versorgt. Die durch den Regler 60 bewirkte Leistungsreglung für den Elektromotor 58 betrifft demnach an diese Anschlussklemmen 68, 70 zusätzlich anschließbare Verbraucher nicht. Bei einer Anordnung der Anschlussklemmen 68', 70' elektrisch nach dem Leistungshalbleiter 66 wirkt sich die Begrenzung der Aufnahmeleistung des Elektromotors 58 auf die Aufnahmeleistungsobergrenze in gleicher Weise wie für den Elektromotor 58 auch auf den oder jeden an diese Anschlussklemmen 68', 70' angeschlossenen zusätzlichen Verbraucher aus. Die vorstehend gemachten Angaben "elektrisch vor" und "elektrisch nach" dem Leistungshalbleiter 66 beziehen sich auf eine Betrachtung ausgehend vom Einspeisepunkt bei L1, wie auch aus der Darstellung in Figur 4 ersichtlich ist. In praktischen Ausführungsformen wird normalerweise nur ein Paar Anschlussklemmen 68, 70; 68', 70' vorgesehen sein, also entweder nur Anschlussklemmen 68, 70, die einen Betrieb zusätzlicher Verbraucher ohne Leistungsbegrenzung erlauben oder nur Anschlussklemmen 68', 70', Betrieb zusätzlicher Verbraucher mit Leistungsbegrenzung erlauben. In besonderen Ausführungsformen können auch beide Varianten gleichzeitig verwirklicht sein.

Die in Figur 4 gezeigte Schaltung ist - ohne die Verbraucher - ein Beispiel für eine Regelungseinheit zur Verwirklichung der Erfindung. Diese umfasst danach den Regler 60, die Leistungsvorgabevorrichtung 62, den Strom-Spannungs-Wandler 64, den Netzspannungs-Sensor 72 und als Stellglied den Leistungshalbleiter 66.

Aufgrund des Ansatzes gemäß der Erfindung ist es möglich, bei einer Limitierung der elektrischen Aufnahmeleistung, auch bei einer evtl. gesetzlichen Limitierung dieser Aufnahmeleistung, genau diese Aufnahmeleistung auch im Betriebsbereich der maximalen Luftleistung und maximalem Wirkungsgrad zur Verfügung zu stellen. Daraus ergibt sich gegenüber der heutigen Situation eine Saugleistungssteigerung an der Bodendüse zwischen 10% und 20%.

Zusammenfassend lässt sich die vorliegende Erfindung damit wie folgt kurz beschreiben: Es wird ein Staubsauger 1 mit einem von einem Antriebsaggregat, insbesondere einem Gebläsemotor 14 / Elektromotor 58, mit einer maximalen Aufnahmeleistung angetriebenen Staubsaugergebläse und mit Mitteln zum Betrieb des Antriebsaggregats unterhalb seiner maximalen Aufnahmeleistung, angegeben, der sich durch eine vorgegebene oder vorgebbare Aufnahmeleistungsobergrenze und eine Regelungseinheit auszeichnet, wobei mit der Regelungseinheit, insbesondere deren Regler 60, als Regelgröße eine tatsächliche Aufnahmeleistung oder ein Maß für die tatsächliche Aufnahmeleistung erfassbar und mit der Aufnahmeleistungsobergrenze bzw. einem Maß für die Aufnahmeleistungsobergrenze als Führungsgröße vergleichbar sowie im Sinne einer Angleichung an die Führungsgröße zumindest in einem ersten Arbeitsbereich, in dem eine mögliche Aufnahmeleistung oberhalb der Aufnahmeleistungsobergrenze liegt, beeinflussbar ist, so dass sich einerseits eine Saugleistungssteigerung in einem bestimmten Arbeitsbereich im Vergleich zu einem Antriebsaggregat mit einer maximalen Aufnahmeleistung in Bereich der jetzt vorgegebenen oder vorgebbaren Aufnahmeleistungsobergrenze und gleichzeitig eine Möglichkeit zur Einhaltung bestimmter Grenzwerte, z.B. zur Erfüllung von Vorgaben für bestimmte Energieeffizienzklassen, ergibt. Als Mittel zum Betrieb des Antriebsaggregats unterhalb seiner maximalen Aufnahmeleistung wird im weitesten Sinne eine Steuerungselektronik des Staubsaugers 1 verstanden, die z.B. einen Drehschalter 23 (Figur 2) zur Einstellung der Saugleistung des Staubsaugergebläses umfasst. Das in Figur 4 exemplarisch gezeigte Ausführungsbeispiel der Erfindung stellt einen Teil einer solchen Steuerungselektronik dar. Insofern umfasst diese Steuerungselektronik als Mittel zum Betrieb des Antriebsaggregats unterhalb seiner maximalen Aufnahmeleistung auch die Regelungseinheit mit dem Regler 60, der Leistungsvorgabevorrichtung 62, dem Strom-Spannungs-Wandler 64, dem Spannungssensor 72 und dem als Leistungshalbleiter 66 gezeigten Stellglied, welches aufgrund der Ansteuerung durch den Regler 60 die Leistungsregelung des Elektromotors 58 bewirkt. Die Regelungseinheit als Kombination von Regler 60, Leistungsvorgabevorrichtung 62, Strom-Spannungs-Wandler 64, Spannungssensor 72 und Leistungshalbleiter 66 bewirkt eine Erfassung einer tatsächliche Aufnahmeleistung oder eines Maßes für die tatsächliche Aufnahmeleistung, einen Vergleich der Regelgröße mit der Aufnahmeleistungsobergrenze bzw. einem Maß für die Aufnahmeleistungsobergrenze als Führungsgröße sowie eine Beeinflussung der tatsächlichen Aufnahmeleistung im Sinne einer Angleichung an die Führungsgröße zumindest in einem ersten Arbeitsbereich, in dem eine mögliche Aufnahmeleistung oberhalb der Aufnahmeleistungsobergrenze liegt.

## Patentansprüche

1. Staubsauger mit einem Antriebsaggregat mit einer maximalen Aufnahmeleistung und mit Mitteln zum Betrieb des Antriebsaggregats unterhalb seiner maximalen Aufnahmeleistung, **gekennzeichnet durch**,
eine vorgegebene oder vorgebbare Aufnahmeleistungsobergrenze,
wobei das oder die Mittel eine Regelungseinheit mit Mitteln (60, 62, 64, 66, 72) zur Regelung einer tatsächlichen Aufnahmeleistung des Antriebsaggregats umfasst oder umfassen,
wobei mit der Regelungseinheit als Regelgröße die tatsächliche Aufnahmeleistung oder ein Maß für die tatsächliche Aufnahmeleistung erfassbar und mit der Aufnahmeleistungsobergrenze bzw. einem Maß für die Aufnahmeleistungsobergrenze als Führungsgröße vergleichbar sowie im Sinne einer Angleichung an die Führungsgröße zumindest in einem ersten Arbeitsbereich, in dem eine mögliche Aufnahmeleistung oberhalb der Aufnahmeleistungsobergrenze liegt, beeinflussbar ist.

2. Staubsauger nach Anspruch 1,
wobei durch die Regelungseinheit die Regelgröße anhand eines dem Antriebsaggregat zuführbaren Motorstroms und Motorspannung erfassbar ist.

3. Stausauger nach Anspruch 2,
mit Mitteln (64) zur Umwandlung der als Regelgröße erfassten elektrischen Größen in von der Regelungseinheit verarbeitbaren Kleinspannungen.

4. Staubsauger nach einem der Ansprüche 2 oder 3,
wobei das oder die Mittel zur Begrenzung der Aufnahmeleistung des Antriebsaggregats auf die Aufnahmeleistungsobergrenze eine von der Regelungseinheit zur Angleichung der Regelgröße an die Führungsgröße ansteuerbare Phasenanschnittsteuerung umfasst bzw. umfassen.

5. Verfahren zum Betrieb eines Staubsaugers nach einem der vorangehenden Ansprüche, wobei eine Aufnahmeleistungsobergrenze fest oder veränderlich vorgegeben wird, wobei das oder die Mittel die Aufnahmeleistung des Antriebsaggregats auf die Aufnahmeleistungsobergrenze begrenzt bzw. begrenzen;
wobei mit der Regelungseinheit als Regelgröße eine tatsächliche Aufnahmeleistung oder ein Maß für die tatsächliche Aufnahmeleistung erfasst und mit der Aufnahmeleistungsobergrenze bzw. einem Maß für die Aufnahmeleistungsobergrenze als Führungsgröße verglichen sowie im Sinne einer Angleichung an die Führungsgröße zumindest in einem ersten Arbeitsbereich, in dem eine mögliche Aufnahmeleistung oberhalb der Aufnahmeleistungsobergrenze liegt, beeinflusst wird.

6. Verfahren nach Anspruch 5, wobei die Beeinflussung der Regelgröße im Sinne einer Angleichung an die Führungsgröße mittels Phasenanschnitt erfolgt.

7. Verfahren nach einem der Ansprüche 5 oder 6, wobei ein an den Staubsauger angeschlossener weiterer Verbraucher in gleicher Weise wie das Antriebsaggregat von der Begrenzung auf die Aufnahmeleistungsobergrenze betroffen ist.

8. Verfahren nach einem der Ansprüche 5 oder 6, wobei ein an den Staubsauger angeschlossener weiterer Verbraucher nicht von der Begrenzung auf die Aufnahmeleistungsobergrenze betroffen ist.

## Claims

1. A vacuum cleaner having a drive aggregate with a maximum input power and having means for operating the drive aggregate below its maximum input power, **characterized by** a predefined or predefinable upper limit for the input power, whereby the means comprise a regulating unit having means (60, 62, 64, 66, 72) for regulating the actual input power of the drive aggregate, whereby the regulating unit can detect the actual input power, or a measure of the actual input power, as the controlled variable, it can compare the actual input power to the upper limit for the input power, or to a measure of the upper limit for the input power, as the reference variable, and it can influence the actual input power so that it can conform with the reference variable, at least in a first operating range in which an input power might be above the upper limit for the input power.

2. The vacuum cleaner according to claim 1, whereby the regulating unit can detect the controlled variable on the basis of the motor current and of the motor voltage that can be supplied to the drive aggregate.

3. The vacuum cleaner according to claim 2, having means (64) for converting the electric variables that have been detected as controlled variables into extra-low voltages that can be processed by the regulating unit.

4. The vacuum cleaner according to claim 2 or 3, whereby the means for limiting the input power of the drive aggregate to the upper limit for the input power comprises a generalized phase control that can be actuated by the regulating unit so that the controlled variable can approximate the reference variable.

5. A method for operating a vacuum cleaner according to one of the preceding claims, whereby an upper limit for the input power, which is either fixed or variable, is predefined, whereby the means limits the input power of the drive aggregate to the upper limit for the input power, whereby the regulating unit detects the actual input power, or a measure of the actual input power, as the controlled variable, it compares the actual input power to the upper limit for the input power, or to a measure of the upper limit for the input power, as the reference variable, and it influences the actual input power so that it can conform with the reference variable, at least in a first operating range in which an input power might be above the upper limit for the input power.

6. The method according to claim 5, whereby a generalized phase control is used to influence the controlled variable so that it can conform with the reference variable.

7. The method according to claim 5 or 6, whereby another consumer that is connected to the vacuum cleaner is affected by the limitation to the upper limit for the input power in the same manner as the drive aggregate is.

8. The method according to claim 5 or 6, whereby another consumer that is connected to the vacuum cleaner is not affected by the limitation to the upper limit for the input power.

## Revendications

1. Aspirateur avec un groupe d'entraînement avec une puissance absorbée maximale et avec des moyens destinés au fonctionnement du groupe d'entraînement au-dessous de sa puissance absorbée maximale,
**caractérisé par**
une limite supérieure de puissance absorbée prescrite ou pouvant être prescrite, dans lequel la ou les moyens comprend ou comprennent une unité de régulation avec des moyens (60, 62, 64, 66, 72) destinés à la régulation d'une puissance absorbée effective du groupe d'entraînement,
dans lequel, avec l'unité de régulation en tant que grandeur de régulation, la puissance absorbée effective ou une mesure de la puissance absorbée effective peut être détectée et comparée avec la limite supérieure de puissance absorbée ou respectivement une mesure de la limite supérieure de puissance absorbée en tant que grandeur de guidage, de même qu'elle peut être influencée dans le sens d'un alignement sur la grandeur de guidage au moins dans une première zone de travail dans laquelle une puissance absorbée possible se situe au-dessus de la limite supérieure de puissance absorbée.

2. Aspirateur selon la revendication 1,
dans lequel la grandeur de régulation peut, par l'unité de régulation, être détectée à l'aide d'un courant de moteur et d'une tension de moteur pouvant être conduite au groupe d'entraînement.

3. Aspirateur selon la revendication 2,
avec des moyens (64) destinés à la conversion des grandeurs électriques détectées en tant que grandeur de régulation en basses tensions pouvant être traitées par l'unité de régulation.

4. Aspirateur selon l'une des revendications 2 ou 3,
dans lequel le ou les moyens destinés à la limitation de la puissance absorbée du groupe d'entraînement à la limite supérieure de puissance absorbée comprend ou respectivement comprennent une commande à coupure de phase pouvant être pilotée par l'unité de régulation pour l'alignement de la grandeur de régulation à la grandeur de réglage.

5. Procédé destiné au fonctionnement d'un aspirateur selon l'une des revendications précédentes,
dans lequel une limite supérieure de puissance absorbée est prescrite de façon fixe ou variable, dans lequel le ou les moyens limite ou respectivement limitent la puissance absorbée du groupe d'entraînement à la limite supérieure de puissance absorbée ; dans lequel, avec l'unité de régulation en tant que grandeur de régulation, une puissance absorbée effective ou une mesure de la puissance absorbée effective est détectée et comparée avec la limite supérieure de puissance absorbée ou respectivement une mesure de la limite supérieure de puissance absorbée en tant que grandeur de guidage, de même qu'elle est influencée dans le sens d'un alignement sur la grandeur de guidage au moins dans une première zone de travail dans laquelle une puissance absorbée possible se situe au-dessus de la limite supérieure de puissance absorbée.

6. Procédé selon la revendication 5, dans lequel l'influence exercée sur la grandeur de régulation dans le sens d'un alignement sur la grandeur de guidage s'effectue au moyen d'une coupure de phase.

7. Procédé selon l'une des revendications 5 ou 6, dans lequel un autre consommateur raccordé à l'aspirateur est affecté de la même façon que le groupe d'entraînement par la limitation à la limite supérieure de puissance absorbée.

8. Procédé selon l'une des revendications 5 ou 6, dans lequel un autre consommateur raccordé à l'aspirateur n'est pas affecté par la limitation à la limite supérieure de puissance absorbée.
